# FASCICULE DE BREVET EUROPEEN

(11) **EP 3 921 692 B1**
(45) Date de publication et mention de la délivrance du brevet: **10.01.2024**
(21) Numéro de dépôt: 19832905.4
(22) Date de dépôt: 18.12.2019
(51) Int. Cl.: G02B 27/01, G02B 23/12, G02B 27/00

(54) **SYSTEME DE VISUALISATION DE CASQUE COMPORTANT UN VISUEL DE CASQUE AMOVIBLE COMPATIBLE DE L'UTILISATION DE JUMELLES**
HELMANZEIGESYSTEM MIT EINER ABNEHMBAREN, HELMMONTIERTEN ANZEIGE, DIE MIT DER VERWENDUNG EINES FERNGLASES KOMPATIBEL IST
HELMET DISPLAY SYSTEM COMPRISING A REMOVABLE HELMET-MOUNTED DISPLAY COMPATIBLE WITH THE USE OF BINOCULARS

(30) Priorité: 07.02.2019 FR 1901166
(43) Date de publication de la demande: 15.12.2021
(73) Titulaire: THALES, 92190 Meudon (FR)
(72) Inventeur: BAUDOU, Joël, 33700 Merignac (FR); AYMERIC, Bruno, 33700 Merignac (FR)
(74) Mandataire: Atout PI Laplace
(86) Numéro de dépôt international: PCT/EP2019/086057
(87) Numéro de publication internationale: WO 2020/160827

(56) Documents cités:
- WO-A1-01/21022
- WO-A1-2010/045141
- CAMERON ALEX ED - MARASCO PETER L ET AL: "Optical waveguide technology and its application in head-mounted displays", HEAD- AND HELMET-MOUNTED DISPLAYS XVII; AND DISPLAY TECHNOLOGIES AND APPLICATIONS FOR DEFENSE, SECURITY, AND AVIONICS VI, SPIE, 1000 20TH ST. BELLINGHAM WA 98225-6705 USA, vol. 8383, no. 1, 11 mai 2012 (2012-05-11) , pages 1-11, XP060003091, DOI: 10.1117/12.923660 [extrait le 2012-05-21]
- ATAC ROBERT ET AL: "Scorpion Hybrid Optical-based Inertial Tracker (HObIT) test results", PROCEEDINGS OF SPIE/ IS & T,, vol. 9086, 10 juin 2014 (2014-06-10), pages 90860U-90860U, XP060037241, DOI: 10.1117/12.2050363 ISBN: 978-1-62841-730-2

## Description

Le domaine technique de l'invention est celui des systèmes de visualisation de casque pour pilotes d'aéronef. Plus précisément, le domaine de l'invention est celui des systèmes combinant, à la fois, des jumelles et un viseur ou un visuel de casque.

Un casque de pilote peut comporter trois équipements de visualisation différents. Il s'agit d'une visière de protection, d'un viseur ou d'un visuel de casque et des jumelles de vision nocturne. Dans la suite de la description, on parlera de visuel de casque pour désigner indistinctement un viseur de casque ou un visuel de casque. Les jumelles peuvent être des jumelles de jour ou des jumelles de nuit. Elles sont alors connues sous l'acronyme « JVN » signifiant « Jumelles de Vision Nocturne ».

Les jumelles de vision nocturne captent la luminosité des objets dans le proche infrarouge et restituent une image visible grâce à des dispositifs d'intensification de lumière. Elles comportent deux corps identiques. Chacun des corps comportent trois parties principales qui sont un objectif, le dispositif à intensificateur de lumière et un oculaire. Le champ visuel des JVN donné par l'oculaire a généralement un diamètre de 40 degrés. Pour voir la totalité de l'image intensifiée, l'oculaire des JVN se place généralement à 25 millimètres environ de l'œil.

Un visuel de casque présente une image synthétique ou vidéo à l'infini en superposition sur l'extérieur au moyen d'une optique de projection et d'un combineur ou mélangeur optique. Le combineur peut être intégré à la visière du casque. Il peut également être intégré au visuel de casque. Pour réduire les dimensions de cet élément, on utilise des combineurs à expansion de pupille. Le combineur est alors une lame optique constituée d'une pluralité de prismes réfléchissants vers l'œil la lumière de l'image synthétique.

Le dispositif de visualisation est nécessairement associé à un dispositif de détection de posture. Celui-ci a plusieurs utilités. Il permet de recaler l'image affichée par le dispositif de visualisation. Il permet d'asservir un certain nombre de systèmes embarqués sur l'aéronef, tels que certains capteurs d'imagerie ou certains systèmes d'arme.

Une des difficultés de ce type de système de visualisation est qu'il doit être modulaire. Selon les missions de l'aéronef, l'utilisateur doit pouvoir utiliser le casque dans les configurations suivantes :
- casque et visière ;
- casque, visière et dispositif de visualisation ;
- casque, visière et jumelles ;
- casque, visière, dispositif de visualisation et jumelles.

La modularité doit être obtenue sans avoir à effectuer des montages et des démontages complexes. Elle doit être rendue possible quelle que soit la taille du casque et les différences morphologiques entre utilisateurs. Par ailleurs, les nécessaires réglages du dispositif de visualisation permettant de compenser les différences morphologiques et d'assurer l'harmonisation avec le dispositif de détection de posture doivent être, si possible, maintenus.

Un système modulable est présenté dans le brevet US 2012/0120482 intitulé « Modular day mode/night mode helmet-mounted display » permet l'utilisation simultanée d'un dispositif de visualisation et des jumelles grâce à un dispositif d'affichage à combineur mince à expansion de pupille, ce combineur se plaçant entre l'œil et les JVN, au plus près de l'oculaire.

De jour, un module visière se place sur le casque, de nuit, le module visière est remplacé par les JVN. Le casque est constitué d'un casque de vol dont la visière est retirée et des réceptacles pour le module de visualisation de jour sont ajoutés.

Le principal inconvénient de ce principe est la complexité du passage du mode jour au mode nuit avec la nécessité de stocker momentanément deux modules dans le cockpit. Ce stockage nécessite de disposer des emplacements à proximité du pilote, ce qui est rarement le cas dans des cockpits d'avion ou d'hélicoptères légers.

Un autre inconvénient est lié à l'inclinaison latérale du dispositif d'affichage pour permettre le montage des jumelles Cette inclinaison du dispositif d'affichage ne permet pas d'utiliser la totalité du champ disponible car l'image doit être redimensionnée pour ne pas perturber la vision et l'interprétation du pilote avec des contours inclinés de l'image synthétique.

Le système de visualisation de casque selon l'invention ne présente pas les inconvénients précédents. Il comporte une structure rigide unique qui peut s'adapter aux différentes tailles de casque. Sur cette structure, sont montées différents organes de fixation permettant de monter la visière, les jumelles et le dispositif de visualisation associé à sa détection de position. Les différents réglages d'adaptation sont disposés sur les jumelles et le dispositif de visualisation. La coque du casque est donc complètement standardisée. Seuls les systèmes de visualisation sont individualisés.

Le document "Optical waveguide technology and its application in head-mounted displays" by Alex Cameron (SPIE, Head and helmet-mounted displays XVII, Vol. 8383, pages 1-11, 11 mai 2012) porte sur des systèmes de l'état de la technique de la présente invention.

Plus précisément, l'invention a pour objet le système de visualisation modulaire de casque de la revendication 1.

Avantageusement, le dispositif de visualisation comporte un dispositif de détection de posture.

Avantageusement, le dispositif de détection de posture comporte une caméra.

Avantageusement, le dispositif de visualisation comporte des réglages de position dans deux plans perpendiculaires de façon à régler la distance séparant la pupille du dispositif de visualisation du vertex du casque et la distance interpupillaire.

Avantageusement, le dispositif de visualisation comporte un combineur optique plat à expansion de pupille de façon que le dispositif de visualisation et les jumelles puissent être montés simultanément sur le casque, le combineur optique étant plaqué devant un des deux oculaires des jumelles.

Selon l'inventon, le système de visualisation comporte un cache mécanique qui se monte en lieu et place du dispositif de visualisation lorsque celui-ci n'est pas monté sur l'arceau mécanique, la forme du cache étant adaptée de façon à occulter la partie haute du casque.

Avantageusement, le second dispositif d'accrochage comporte une glissière en forme de queue d'aronde.

Avantageusement, le système de visualisation comporte une visière mobile montée sur l'arceau mécanique.

Avantageusement, la visière mobile comporte deux axes de rotation situés symétriquement de part et d'autre de l'arceau mécanique et à la hauteur du front de l'utilisateur, ladite visière ayant deux positions principales qui sont :
- une position d'utilisation basse, appliquée lorsque les jumelles ne sont pas montées dans leur support, dans cette position basse, la visière couvre le dispositif de visualisation et son combineur ;
- une position d'utilisation haute, appliquée lorsque les jumelles sont montées dans leur support, dans cette position haute, la visière est située sur le haut du casque.

Avantageusement, l'arceau mécanique est fixé sur le casque au moyen de deux ensembles de fixation situés symétriquement de part et d'autre du casque, chaque ensemble de fixation comportant une entretoise d'épaisseur adaptée à la taille du casque, l'arceau mécanique étant de taille unique.

Les dessins annexés illustrent l'invention :
[Fig.1] représente une vue de côté du système de visualisation selon l'invention avec son dispositif de visualisation ;
[Fig.2] représente une vue de face de l'arceau mécanique et du dispositif de visualisation associé selon l'invention ;
[Fig.3] représente une vue de face de l'arceau mécanique, du dispositif de visualisation et du cache associé selon l'invention ;
[Fig.4] représente une vue de côté d'une partie du système de visualisation selon l'invention avec ses jumelles ;
[Fig.5] représente une vue de côté du système de visualisation selon l'invention portant le dispositif de visualisation, visière baissée ;
[Fig.6] représente une vue de côté du système de visualisation selon l'invention portant les jumelles, visière relevée.

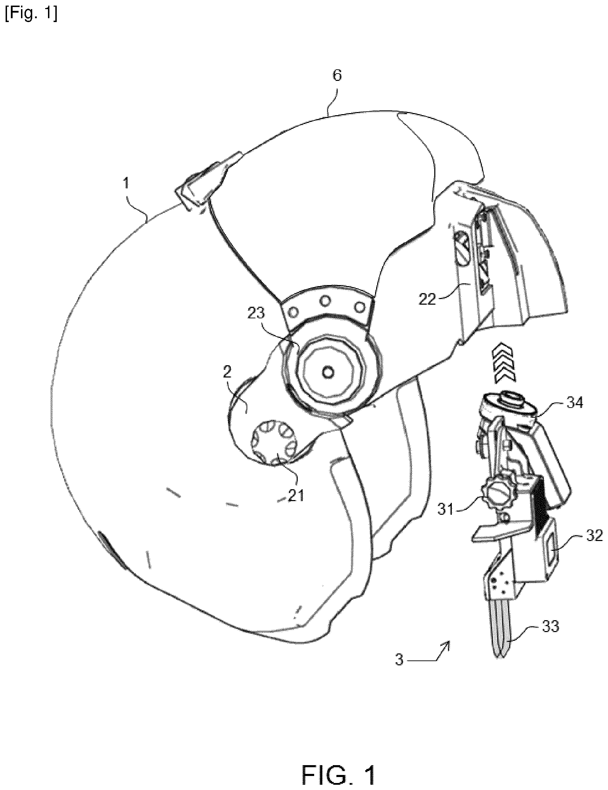

Le système de visualisation modulaire selon l'invention comporte essentiellement une coque 1 de casque, un arceau mécanique 2 monté sur la partie frontale de cette coque 1, une visière rabattable 6, un dispositif de visualisation 3, un cache 4 et une paire de jumelles 5. A titre d'exemple, la figure 1 représente une vue de côté de la coque 1, de l'arceau mécanique 2, de la visière 6 et du dispositif de visualisation 3.

La forme générale de cet arceau 2 est un arc de cercle renforcé par des longerons et une casquette supérieure. Ces derniers éléments ne sont pas visibles sur les figures 1, 2 et 3.

Comme on le voit sur les figures 1, 2 et 3, cet arceau 2 comporte les éléments suivants :
- des moyens de fixation 21 sur la coque du casque ;
- une visière mobile 6 ;
- des moyens de fixation et d'articulation 23 de la visière mobile 16 ;
- un premier dispositif d'accrochage 25 de jumelles ;
- un second dispositif d'accrochage 22 du dispositif de visualisation ;
- les différentes connexions électriques nécessaires à l'alimentation du dispositif de visualisation et/ou des jumelles.

Les deux moyens de fixation 21 sur la coque du casque sont situés aux deux extrémités de l'arceau comme on le voit sur les figures 1, 2 et 3.

Les deux moyens de fixation et d'articulation 23 de la visière mobile 6 sont situés à quelques centimètres et au-dessus et en avant des moyens de fixation 21. La visière 6 est mobile en rotation autour de ses axes. La visière mobile a une double fonction de protection visuelle et mécanique.

La visière mobile 6 est, classiquement, de forme courbe. Elle a une fonction de protection mécanique et optique. Elle peut être teintée pour constituer une visière solaire ou anti-laser. Si le casque est un casque standard adapté, il est avantageux d'utiliser la visière initiale du casque en la réimplantant à une autre position que sa position initiale. On évite ainsi les coûts de développement et d'achat d'une visière spécifique.

La visière a deux positions principales qui sont :
- une position d'utilisation basse, appliquée lorsque les jumelles ne sont pas montées dans leur support, dans cette position basse, la visière couvre le dispositif de visualisation et son combineur ;
- une position d'utilisation haute, appliquée lorsque les jumelles sont montées dans leur support, dans cette position haute, la visière est située sur le haut du casque.

L'arceau comporte un premier dispositif d'accrochage 25 de jumelles. Ce premier moyen d'accrochage peut être une rainure en forme de T disposée dans la structure mécanique de l'arceau. D'autres dispositions sont possibles.

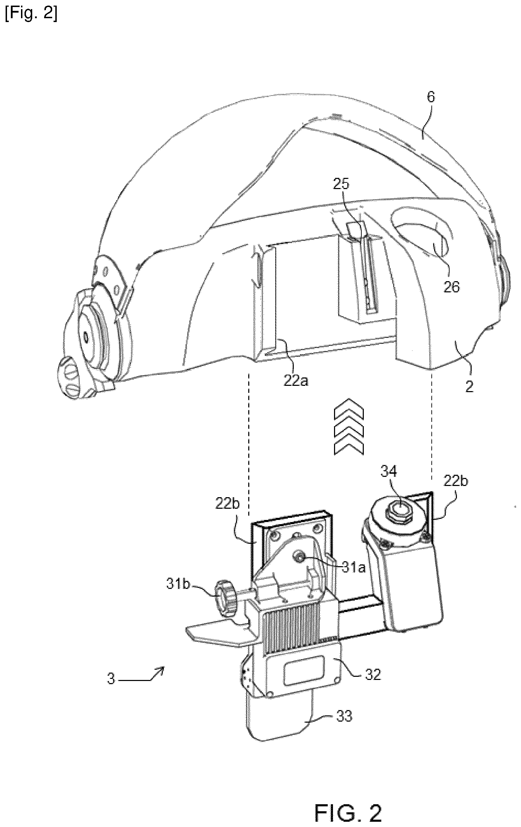

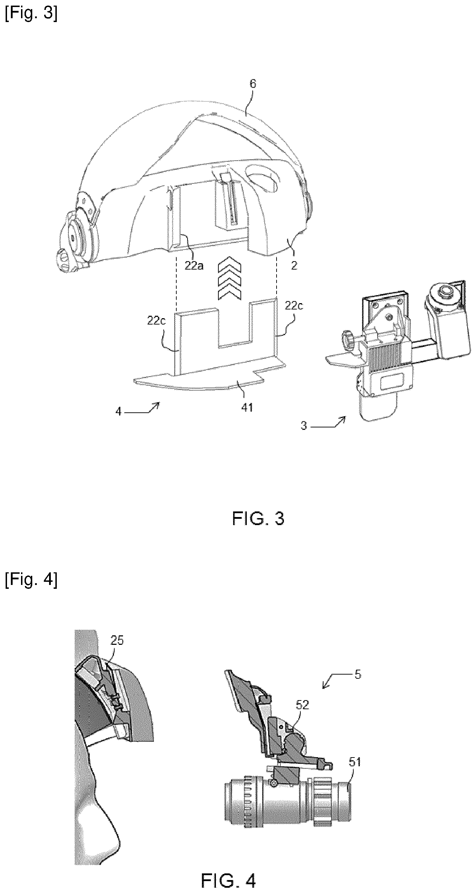

L'arceau comporte également un second dispositif d'accrochage 22 du dispositif de visualisation. A titre d'exemple, le second dispositif d'accrochage comporte une glissière en forme de queue d'aronde. Sur les figures 2 et 3, la partie gauche de la rainure 22a de la queue d'aronde est visible sur l'arceau mécanique 2. Sur ces mêmes figures, le tenon 22b de la queue d'aronde disposé sur le dispositif de visualisation est également visible.

Le dispositif de visualisation comporte un ensemble optique, le dispositif de détection de posture 34 et des moyens de réglage 31. L'ensemble optique comprend trois parties principales qui sont un dispositif d'affichage 32, une optique de collimation et un combineur optique 33.

A titre d'exemple, le dispositif d'affichage 32 comporte un écran plat avec sa source d'éclairage et sa carte électronique de pilotage. L'optique de projection assure la collimation de l'image diffusée. Le combineur 33 superpose cette image sur le paysage extérieur. Il est généralement à expansion de pupille.

Un combineur à expansion de pupille est une lame optique mince à faces planes et parallèles dans laquelle est insérée une pluralité de lames semi-réfléchissantes inclinées et parallèles entre elles. L'épaisseur du combineur est de quelques millimètres. Grâce à cette disposition, il est possible d'obtenir, dans un encombrement réduit, une pupille de dimensions suffisantes pour l'observation. La distance séparant le combineur de l'œil est de l'ordre de 25 millimètres.

Le dispositif de détection 34 de position a plusieurs utilités. Il permet de recaler l'image affichée par le dispositif de visualisation. Il permet d'asservir un certain nombre de systèmes embarqués sur l'aéronef, tels que certains capteurs d'imagerie ou certains systèmes d'arme.

A titre d'exemple, ce dispositif est une micro-caméra à grand champ et haute résolution qui détecte des mires spécifiques disposées à des emplacements connus du cockpit. La position et l'orientation de l'image de ces mires permet de déterminer la position et l'orientation de la caméra et, par conséquent du casque sur lequel la caméra est montée. Bien entendu, le système de visualisation selon l'invention n'est pas restreint à ce seul type de détection de position.

Il est essentiel que la liaison mécanique entre ce dispositif de détection est le dispositif de visualisation soit la plus rigide possible de façon que la position du casque déterminée par la caméra soit toujours représentative de la position du dispositif de visualisation. Comme on le voit sur les figures 2 et 3, le dispositif de visualisation et la caméra sont montés sur une structure rigide unique en forme de U. Les branches du U entourent le dispositif d'accrochage des jumelles lorsque le dispositif de visualisation est monté sur l'arceau 2. Cette structure comporte le tenon 22b de la queue d'aronde.

Comme on le voit sur les figures 2 et 3, ce dispositif de détection peut s'encastrer à l'intérieur de l'arceau mécanique qui comporte alors une ouverture 26 débouchant de façon que la caméra ne soit pas occultée.

Le dispositif de visualisation comporte également des moyens de réglages 31 de position dans deux plans perpendiculaires de façon à régler la distance séparant la pupille du dispositif de visualisation du vertex du casque et la distance interpupillaire. La course de ces réglages en translation est de 1 à 3 centimètres. A titre d'exemple comme on le voit sur les figures 2 et 3, il est possible d'utiliser une butée 31a coulissant dans une fenêtre oblongue pour réaliser le réglage vertical. Sur ces figures, le réglage horizontal est réalisé au moyen d'une vis moletée 31b qui prend appui sur un plan. D'autres moyens de réglage sont possibles.

Les jumelles peuvent être des jumelles de jour ou des jumelles de nuit. Lorsque les jumelles sont des jumelles de jour, elles ont un grossissement différent de 1. Dans ce qui suit et à titre d'exemple non limitatif, on considère que les jumelles sont des jumelles de nuit à intensificateur de lumière. Généralement, leur grossissement est de 1.

Dans le cas de la figure 4, les jumelles sont des jumelles de vision de nuit. Les jumelles 5 détachables comportent deux corps 51 identiques assurant l'amplification de la lumière, des moyens de réglages et un support de fixation 52 sur l'arceau mécanique 2.

Chaque corps de jumelles 51 comporte, dans cet ordre, un objectif, un dispositif amplificateur de lumière de l'image donnée par l'objectif et un oculaire formant de l'image intensifiée une image à l'infini.

Lorsque les jumelles 5 sont montées sur l'arceau 2, il est impératif que les pupilles des oculaires soient le mieux possible centrées sur les pupilles des yeux du pilote. Compte-tenu des différences morphologiques entre les différents utilisateurs, des réglages sont nécessaires pour obtenir ce résultat. Les jumelles comportent généralement quatre axes de réglages qui sont un réglage vertical, un réglage latéral, un réglage longitudinal et un réglage angulaire.

La course de réglage vertical est généralement de 30 millimètres environ, la course de réglage latéral ou d'écart inter pupillaire est généralement supérieure à 20 millimètres, la course de réglage longitudinal est généralement supérieure à 25 millimètres et le réglage angulaire dans le plan vertical est généralement de l'ordre de plus ou moins 10°.

Le système de visualisation est essentiellement modulaire. Il comporte quatre combinaisons possibles des différents dispositifs décrits ci-dessus.

La première combinaison comporte uniquement le casque et sa visière. Dans ce cas, un cache mécanique 4 se monte en lieu et place du dispositif de visualisation comme on le voit sur la figure 2. Le cache comporte une partie plane 41 horizontale dont la forme est adaptée de façon à occulter la partie haute du casque. Ce cache comporte un tenon 22c en queue d'aronde identique à celui du dispositif de visualisation et qui se monte dans la partie 22a de la queue d'aronde située sur l'arceau. On évite ainsi que de la lumière parasite arrive jusqu'à l'œil de l'utilisateur.

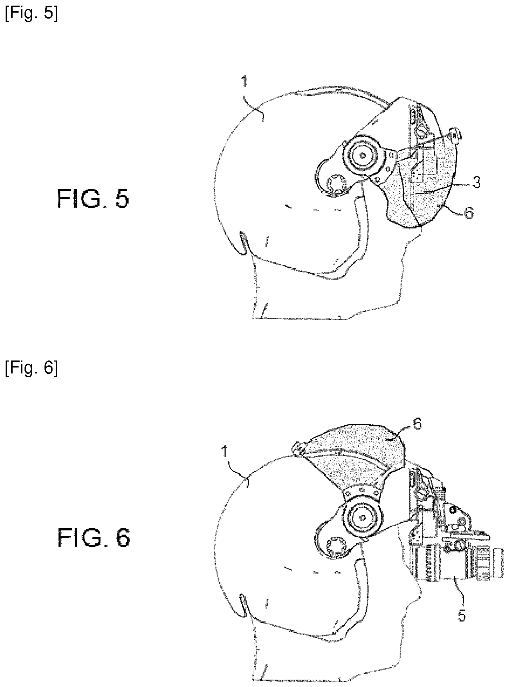

La seconde combinaison rassemble le casque, sa visière et le dispositif de visualisation. Dans cette configuration, il est possible de rabattre la visière devant le dispositif de visualisation comme on le voit sur la figure 5 qui représente une vue de côté du système de visualisation portant le dispositif de visualisation 3.

La troisième configuration comprend le casque, la visière et les jumelles. Dans cette configuration, la visière est nécessairement en position haute sur le haut du casque comme on le voit sur la figure 6 qui représente une vue de côté du système de visualisation portant les jumelles 5.

La quatrième configuration comprend le casque, la visière, le dispositif de visualisation et les jumelles. Dans cette configuration, la visière est nécessairement en position haute sur le haut du casque. Le combineur du dispositif de visualisation est alors plaqué contre un des deux oculaires des jumelles. On utilise les différents réglages pour assurer cette fonction.

## Revendications

1. Système de visualisation modulaire de casque comportant au moins une coque (1) de casque, des jumelles (5) et un dispositif de visualisation (3), la coque de casque comportant un arceau mécanique (2) monté fixe sur la partie frontale dudit casque, ledit arceau mécanique comportant au moins un premier dispositif d'accrochage (25) des jumelles, ledit arceau comportant un second dispositif d'accrochage (22) du dispositif de visualisation, **caractérisé en ce que** le système de visualisation comporte un cache mécanique (4) qui se monte en lieu et place du dispositif de visualisation lorsque celui-ci n'est pas monté sur l'arceau mécanique, la forme du cache étant adaptée de façon à occulter la partie haute du casque.

2. Système de visualisation modulaire de casque selon la revendication 1, **caractérisé en ce que** le dispositif de visualisation (3) comporte un dispositif (34) de détection de posture.

3. Système de visualisation modulaire de casque selon la revendication 2, **caractérisé en ce que** le dispositif de détection de posture comporte une caméra.

4. Système de visualisation modulaire de casque selon l'une des revendications précédentes, **caractérisé en ce que** le dispositif de visualisation comporte des réglages de position (31) dans deux plans perpendiculaires de façon à régler la distance séparant la pupille du dispositif de visualisation du vertex du casque et la distance interpupillaire.

5. Système de visualisation modulaire de casque selon l'une des revendications précédentes, **caractérisé en ce que** le dispositif de visualisation (3) comporte un combineur optique (33) plat à expansion de pupille de façon que le dispositif de visualisation et les jumelles puissent être montés simultanément sur le casque, le combineur optique étant plaqué devant un des deux oculaires des jumelles.

6. Système de visualisation modulaire de casque selon l'une des revendications précédentes, **caractérisé en ce que** le second dispositif d'accrochage comporte une glissière (22a) en forme de queue d'aronde.

7. Système de visualisation modulaire de casque selon l'une des revendications précédentes, **caractérisé en ce que** le système de visualisation comporte une visière mobile (6) montée sur l'arceau mécanique.

8. Système de visualisation modulaire de casque selon la revendication 7, **caractérisé en ce que** la visière mobile comporte deux axes de rotation (23) situés symétriquement de part et d'autre de l'arceau mécanique et à la hauteur du front de l'utilisateur, ladite visière ayant deux positions principales qui sont :
- une position d'utilisation basse, appliquée lorsque les jumelles ne sont pas montées dans leur support, dans cette position basse, la visière couvre le dispositif de visualisation et son combineur ;
- une position d'utilisation haute, appliquée lorsque les jumelles sont montées dans leur support, dans cette position haute, la visière est située sur le haut du casque.

9. Système de visualisation de casque selon l'une des revendications précédentes, **caractérisé en ce que** l'arceau mécanique est fixé sur le casque au moyen de deux ensembles de fixation (21) situés symétriquement de part et d'autre du casque, chaque ensemble de fixation comportant une entretoise d'épaisseur adaptée à la taille du casque, l'arceau mécanique étant de taille unique.

## Patentansprüche

1. Modulares Helmanzeigesystem mit mindestens einer Helmschale (1), einem Fernglas (5) und einer Anzeigevorrichtung (3), wobei die Helmschale einen mechanischen Bügel (2) aufweist, der fest auf dem vorderen Teil des Helms montiert ist, wobei der mechanische Bügel mindestens eine erste Einhängevorrichtung (25) für das Fernglas aufweist, wobei der Bügel eine zweite Einhängevorrichtung (22) für die Anzeigevorrichtung aufweist, **dadurch gekennzeichnet, dass** das Anzeigesystem eine mechanische Abdeckung (4) aufweist, die anstelle der Anzeigevorrichtung montiert wird, wenn diese nicht auf dem mechanischen Bügel montiert ist, wobei die Form der Abdeckung so angepasst ist, dass sie den oberen Teil des Helms verdeckt.

2. Modulares Helmanzeigesystem nach Anspruch 1, **dadurch gekennzeichnet, dass** die Anzeigevorrichtung (3) eine Vorrichtung (34) zur Erkennung einer Körperhaltung aufweist.

3. Modulares Helmanzeigesystem nach Anspruch 2, **dadurch gekennzeichnet, dass** die Vorrichtung zur Erkennung einer Körperhaltung eine Kamera aufweist.

4. Modulares Helmanzeigesystem nach einem der vorhergehenden Ansprüche, **dadurch gekennzeichnet, dass** die Anzeigevorrichtung Positionseinstellungen (31) in zwei senkrechten Ebenen aufweist, um den Abstand zwischen der Pupille der Anzeigevorrichtung und dem Scheitelpunkt des Helms und den Pupillenabstand einzustellen.

5. Modulares Helmanzeigesystem nach einem der vorhergehenden Ansprüche, **dadurch gekennzeichnet, dass** die Anzeigevorrichtung (3) einen flachen optischen Kombinierer (33) mit Pupillenerweiterung aufweist, sodass die Anzeigevorrichtung und das Fernglas gleichzeitig am Helm montiert werden können, wobei der optische Kombinierer flach vor einem der beiden Okulare des Fernglases platziert ist.

6. Modulares Helmanzeigesystem nach einem der vorhergehenden Ansprüche, **dadurch gekennzeichnet, dass** die zweite Einhängevorrichtung eine schwalbenschwanzförmige Gleitschiene (22a) bildet.

7. Modulares Helmanzeigesystem nach einem der vorhergehenden Ansprüche, **dadurch gekennzeichnet, dass** das Anzeigesystem ein bewegliches Visier (6) aufweist, das an dem mechanischen Bügel montiert ist.

8. Modulares Helmanzeigesystem nach Anspruch 7, **dadurch gekennzeichnet, dass** das bewegliche Visier zwei Drehachsen (23) aufweist, die sich symmetrisch zu beiden Seiten des mechanischen Bügels und auf der Höhe der Stirn des Benutzers befinden, wobei das Visier zwei Hauptpositionen aufweist, die wie folgt sind:
- eine untere Benutzungsposition, die angewendet wird, wenn das Fernglas nicht in seiner Halterung montiert ist; in dieser unteren Position deckt das Visier die Anzeigevorrichtung und ihren Kombinierer ab;
- eine obere Benutzungsposition, die angewendet wird, wenn das Fernglas in seiner Halterung montiert ist; in dieser oberen Position befindet sich das Visier auf der Oberseite des Helms.

9. Helmanzeigesystem nach einem der vorhergehenden Ansprüche, **dadurch gekennzeichnet, dass** der mechanische Bügel am Helm mittels zweier Befestigungsbaugruppen (21) befestigt ist, die sich symmetrisch auf beiden Seiten des Helms befinden, wobei jede Befestigungsbaugruppe einen Abstandshalter mit einer Dicke aufweist, die an die Größe des Helms angepasst ist, wobei der mechanische Bügel eine Einheitsgröße hat.

## Claims

1. A modular helmet display system having at least one helmet shell (1), binoculars (5) and a display device (3), the helmet shell having a mechanical arch (2) securely mounted on the frontal part of said helmet, said mechanical arch having at least a first device (25) for attaching the binoculars, said arch having a second device (22) for attaching the display device, **characterised in that** the display system has a mechanical cover (4) which is mounted in place of the display device when the latter is not mounted on the mechanical arch, the shape of the cover being adapted so as to hide the upper part of the helmet.

2. The modular helmet display system according to claim 1, **characterised in that** the display device (3) has a posture detection device (34).

3. The modular helmet display system according to claim 2, **characterised in that** the posture detection device has a camera.

4. The modular helmet display system according to one of the preceding claims, **characterised in that** the display device has position adjustments (31) in two perpendicular planes so as to adjust the distance separating the pupil of the display device from the vertex of the helmet and the interpupillary distance.

5. The modular helmet display system according to one of the preceding claims, **characterised in that** the display device (3) has a flat pupil-expansion optical combiner (33) so that the display device and the binoculars may be mounted simultaneously on the helmet, the optical combiner being placed flat in front of one of the two eyepieces of the binoculars.

6. The modular helmet display system according to one of the preceding claims, **characterised in that** the second attachment device has a slide (22a) in the shape of a dovetail.

7. The modular helmet display system according to one of the preceding claims, **characterised in that** the display system has a movable visor (6) mounted on the mechanical arch.

8. The modular helmet display system according claim 7, **characterised in that** the movable visor has two axes of rotation (23) located symmetrically on either side of the mechanical arch and at the height of the user's forehead, said visor having the following two main positions:
- a down position of use, applied when the binoculars are not mounted in their holder, the visor covering the display device and its combiner in this down position;
- an up position of use, applied when the binoculars are mounted in their holder, the visor being located on top of the helmet in this up position.

9. The helmet display system according one of the preceding claims, **characterised in that** the mechanical arch is attached to the helmet by means of two attachment assemblies (21) located symmetrically on either side of the helmet, each attachment assembly having a spacer, the thickness of which is matched to the size of the helmet, the mechanical arch being of one size.
